# Europäisches Patentamt

## European Patent Office

## Office européen des brevets

(19)

(11) Veröffentlichungsnummer: **0 246 219**
**B1**

(12)

# EUROPÄISCHE PATENTSCHRIFT

(45) Veröffentlichungstag der Patentschrift:
25.10.89

(51) Int. Cl.⁴: **F 16 L 5/02,** H 02 G 3/22

(21) Anmeldenummer: **87890093.5**

(22) Anmeldetag: **11.05.87**

(54) **Rohrdurchführung.**

(30) Priorität: 15.05.86 AT 1300/86
07.04.87 AT 846/87

(43) Veröffentlichungstag der Anmeldung:
19.11.87 Patentblatt 87/47

(45) Bekanntmachung des Hinweises auf die Patenterteilung:
25.10.89 Patentblatt 89/43

(84) Benannte Vertragsstaaten:
BE CH DE FR IT LI NL SE

(56) Entgegenhaltungen:
WO-A-81/02816
DE-A-1 801 903
FR-A-2 179 523

(73) Patentinhaber: **Poloplast Kunststoffwerk der Eternit- Werke Ludwig Hatschek und der Durit- Werke Kern & Co., Poloplast- Strasse 1, A-4060 Leonding Oberösterreich (AT)**

(72) Erfinder: **Borth, Rainer, Am Ipfbach 61, A-4490 St. Florian (AT)**
Erfinder: **Atzmüller, August, Drautendorf 10, A-4174 Niederwaldkirchen (AT)**

(74) Vertreter: **Collin, Hans, Dipl.- Ing. Dr., Patentanwälte Dipl.- Ing. Dr. Hans Collin Dipl.- Ing. Erwin Buresch Dipl.- Ing. Dr. Helmut Wildhack Dipl.- Ing. Armin Häupl Mariahilfer Strasse 50, A-1070 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft eine Rohrdurchführung für ein durch eine Wand, insbesondere Betonwand, zu führendes Rohr mit einem vorzugsweise aus Kunststoff bestehenden Futterrohr, welches das Rohr mit Abstand umgibt und in die Wand eingebettet wird, wobei zwischen dem Rohr und dem Futterrohr zumindest eine Dichtung angeordnet ist und das Futterrohr in zumindest einem Endbereich einen rund um die Rohröffnung verlaufenden vom Futterrohr wegweisenden ringförmigen Flansch besitzt.

Rohrdurchführungen sind Konstruktionen, mit denen ein Rohr durch eine Ausnehmung in einer Wand, z. B. in einem Bauwerk oder Schacht, vollständig oder teilweise hindurchgeführt wird. Rohrdurchführungen werden auch eingesetzt, wenn Rohre in eine Wand eingeführt werden.

Aus der DE-A-2 641 682 bzw. der DE-A-1 801 903 bzw. der FR-A-2 179 523 ist eine Rohrdurchführung durch eine Wand bekannt, bei der ein vorzugsweise aus Kunststoff bestehendes Futterrohr das durch die Wand hindurchführende Rohr mit Abstand umgibt, wobei zwischen dem Rohr und dem Futterrohr zumindest eine Dichtung angeordnet ist. Auch aus der WO-A-8 102 816 ist eine solche Rohrdurchführung bekannt, bei welcher das Futterrohr zumindest einen Gewindeabschnitt aufweist, der mit einem korrespondierenden Gewindeabschnitt eines zusätzlichen, in bezug auf das Futterrohr koaxial angeordneten Rohrteil in Eingriff gebracht bzw. verschraubt ist, der das durch die Wand hindurchzuführende Rohr gleichfalls mit Abstand umgibt und mit seiner äußeren Umfangsfläche in die Wand eingebettet ist.

Die Dichtheit und Anpassungsfähigkeit derartiger Rohrdurchführungen z. B. an unterschiedliche Wandstärken ist verbesserungsbedürftig.

Derartige Rohrdurchführungen werden üblicherweise als verlorene Schalung in der Wand zurückgelassen bzw. vor der Errichtung der Wand zwischen zwei Schalungswänden für die Wand vorfixiert. Dabei treten jedoch Schwierigkeiten dahingehend auf, daß bei Errichtung der Wand, insbesondere z. B. von Betonwänden, Beton oder andere Fremdkörper in die Rohrdurchführung eintreten bzw. deren Stirnfläche beschädigen können.

Flansche in Verbindung mit Rohrdurchführungen werden überall dort eingesetzt, wo es gilt, das Mauerwerk bzw. die Gebäudeinnenseite gegen drückende und stauende Flüssigkeiten zu schützen bzw. abzudichten (z. B. Grundwasser). Die Flansche sollen dabei bündig und flächengleich in das Mauerwerk eingesetzt, mit einem Bitumenanstrich versehen und anschließend mit bituminierten Gewebebahnen beflammt werden. (Auch die Verwendung von Kunststofffolienbahnen, die zwischen dem Flansch und einem Gegenflansch, der mit dem Flansch verschraubt wird, geklemmt werden, ist in der Praxis üblich. Ein Einbau erfolgt zumeist in Mauerwerke aus Beton unterschiedlicher Kornzusammensetzungen, wobei der Beton in flüssiger bis breiiger Form in die Schalung geschüttet und schichtweise mittels Rüttler verdichtet wird. Dabei treten erhebliche Kräfte auf (Auftriebskräfte, Aufprallkräfte, hydrostatische Kräfte und Schwingungskräfte), die auf den in der Schalung eingebetteten Flansch und die Rohrdurchführung einwirken.

Die bisher bekannten Rohrdurchführungen mit Flanschen haben den Nachteil, daß sie keine ausreichende Abdichtung gegenüber der Schalungswand bieten. Der Beton kann insbesondere während des Auffüllens der Schalung und während des Verdichtens zwischen dem Flansch und der Schalungswand in die Rohrdurchführung eindringen. Nach dem Ausschalen des Mauerwerkes haftet ein Betonfilm auf dem Flansch, der bis zu einigen Millimetern Dicke erreichen kann. Nach dem Abschlagen der Betonreste sitzt der Flansch tiefer im Mauerwerk als vorgesehen. Ein ebener flächengleicher Verbund der Flanschfläche mit dem Mauerwerk ist somit nicht gut erreichbar. Da in diesen Fällen ein um den Flansch herum durch das erforderliche Abschlagen bedingter scharfkantiger Betonbruch vorhanden ist, konnten Folienbahnen in diesem Bereich Schaden nehmen und somit war die Bauwerksabdichtung gefährdet.

Ein weiterer Nachteil ist es, daß ein Rohrsetzungsschutz auf den Flansch nachträglich aufgeschweißt werden muß oder bei zuvor aufgeschweißtem Setzungsschutz die Schalung ausgeschnitten werden muß, was die Weiterverwendung der Schalung in Frage stellt. Ein weiterer Nachteil sind am Flansch angebrachte Gewindebolzen, die über die Flanschfläche ragen, um einen Gegenflansch aufschrauben zu können. An diesen Stellen müßten somit ebenfalls Ausnehmungen in der Schaltafel ausgeschnitten werden.

Das Vorfixieren der Rohrdurchführungen in der Schalung erfolgte mit bauseitig herzustellenden Holzklötzen, die an die Schaltafel genagelt werden und über die der Flansch mit der Rohrdurchführung geschoben wird. Diese Art der Befestigung der Rohrdurchführung ist aufwendig und ungenau.

Aufgabe der Erfindung ist es, die angeführten Nachteile der bekannten Rohrdurchführungen zu vermeiden und insbesondere die Dichtheit des Flansches von Rohrdurchführungen in bezug auf die eingesetzte Schalungstafel derart sicherzustellen, daß während der Herstellung des Mauerwerkes ein Verschieben oder Ablösen des Flansches von der Schalung nicht möglich ist. Außerdem sollen die Anforderungen an den Rohrschutz gegenüber Setzungen in einfacher und wirtschaftlicher Weise erfüllt und eine einfache Befestigung erreicht werden.

Diese Aufgabe wird bei der eingangs näher bezeichneten Rohrdurchführung erfindungsgemäß dadurch gelöst, daß der Flansch zumindest mit seinem außenliegenden Randbereich über die Öffnung der Rohrdurchführung axial übersteht und daß der Flansch zur Verstellung oder Abbiegung zumindest dieses überstehenden Randbereiches unter Druckeinwirkung in Richtung auf das Futterrohr in die Ebene der Öffnung, z. B. durch Andrücken an eine Schalungswand elastisch biegbar ausgebildet ist.

Der elastisch biegbare Flansch wird bei Instellungbringen der Rohrdurchführung derart an die Schalung angedrückt, daß ein Eindringen von Fremdstoffen während der Wandherstellung nicht mehr möglich ist.

Aus der WO-A-8 602 136 ist eine elastische Wandungsdurchführung für Rohre und Versorgungsleitungen bekannt, die ein im Mantelrohr verlaufendes schlauchförmiges Elastikteil aufweist, das an einem Ende mit dem Mantelrohr und auf der gegenüberliegenden Seite indirekt und verdrehbar über ein Drehteil oder eine Klemmscheibe verbunden ist. Durch Betätigen des Drehteils bzw. der Klemmscheibe wird hier eine Torsionsdichtung erzielt, indem das als schlauchförmige Dichtungsbahn ausgebildete Elastikteil um das durchzuführende Rohr bzw. die Leitung herumgeschlungen wird. Diese bekannte Klemmscheibe ist aber lediglich ein Betätigungselement und dient nicht zur Abdichtung gegenüber der Schalungswand.

Gemäß einer weiteren vorteilhaften Ausgestaltung der Erfindung kann vorgesehen sein, daß der Endbereich des Flansches in zumindest eine vorzugsweise spitzwinkelige Dichtlippe ausläuft bzw. zumindest eine Dichtlippe trägt, die vom Futterrohr stirnseitig weggerichtet ist; diese Dichtlippe wird dann durch die elastische Biegbarkeit des Flansches fest gegen die Schalungswand gepreßt. Dabei kann der Flansch in der Ebene der Öffnung gelegen sein und nur die Dichtlippe über die Ebene der Öffnung überstehen.

Erfindungsgemäß kann weiters vorgesehen sein, daß die Rückseite des Randbereiches des Flansches bzw. der Dichtlippe mit einer Abschrägung versehen ist. Durch die schräge, flächenvergrößernde Ausbildung der Rückseite der Kanten bzw. Randbereiche des Flansches wird eine zusätzliche Anpreßkraft durch den durch den flüssigen Beton wirksamen hydrostatischen Druck erreicht.

Die Anpreßkraft hängt von der Dicke und radialen Erstreckung des Flansches, dem Werkstoff bzw. dessen E-Modul usw. ab. Bevorzugt ist es, wenn der Überstand des Randbereiches des Flansches bzw. der Dichtlippe über die Ebene der Öffnung 0,5 - 10 %, vorzugsweise 2 - 5 %, insbesondere 3 %, der radialen Erstreckung des Flansches beträgt.

Um die Rohrdurchführung an verschiedene Wandstärken des Mauerwerks anpassen zu können, ist in weiterer Ausgestaltung der Erfindung vorgesehen, daß der Flansch einen Gewindeabschnitt umfaßt, der mit dem Futterrohr verschraubbar ist und/oder mit diesem verklebt und/oder mittels Dichtring und Wut abgedichtet wird, wobei gegebenenfalls zwischen dem Flansch und dem Gewindeabschnitt ein Rohrteil ausgebildet ist.

Die Rückstellkraft, die der elastischen Verformung des Flansches entgegenwirkt, kann dadurch unterstützt werden, daß auf der dem Futterrohr zugewandten Rückseite des Flansches Stege zur Erhöhung der Festigkeit des Flansches angeformt sind, die vorzugsweise mit dem Rohrteil zwischen Flansch und Gewindeabschnitt verbunden bzw. an diesen angeformt sind. Diese Stege verstärken die einer Verstellung des Flansches entgegenwirkende Kraft und erzeugen eine definierte Anpreßkraft des Flansches an die Schalungswand im Bereich seiner äußeren Ringfläche bzw. Dichtlippe.

Die durch den flüssigen Beton ausgeübte Druckeinwirkung kann noch verstärkt werden, wenn auf der dem Futterrohr zugewandten Rückseite des Flansches vorzugsweise diesen nach außen überragende und insbesondere parallel zur Ebene der Öffnung verlaufende Verankerungsflächen vorgesehen sind, die an die Rückseite des Flansches angeformt oder von den Stegen getragen sind und vorzugsweise regelmäßig über den Umfang des Flansches verteilt sind, und wenn gegebenenfalls die Verankerungsflächen außerhalb des Umfangs des Flansches verlaufende Bohrungen zum Durchführen von Befestigungselementen, z. B. Nägeln, besitzen.

Nach dem Aushärten des Mauerwerks wird die Schalung abgenommen und der Flansch mit der Rohrdurchführung ist im Mauerwerk eingebettet. Ein Lösen des unter Vorspannung stehenden Flansches aus dem Mauerwerk wird mittels der Verankerungsflächen verhindert. Die Bohrungen in den Verankerungsflächen können dazu benützt werden, daß der Flansch mittels geeigneter Nägel oder Klammern an der Schalungswand vorfixiert werden kann, ohne daß die elastische Verformung des Flansches beeinträchtigt und die Schalungswand beschädigt wird. Nach dem Einbetten der Rohrdurchführung im Mauerwerk können die Nägel abgezwickt werden, so daß sie nicht über den Beton vorragen, worauf die Wand mit einem Dichtmittel beschichtet werden kann.

Prinzipiell ist es möglich, Rohrdurchführungen herzustellen, die ein Futterrohr besitzen, das an jedem Ende einen einstückig mit ihm ausgebildeten Flansch trägt. Ferner sind Futterrohre möglich, die an ihrem einen Ende einen einstückig angeformten Flansch besitzen und an ihrem anderen Ende mit einem Flansch verschraubt, verklebt oder durch Stecken dicht verbunden sind. Möglich sind auch Rohrdurchführungen mit einem Futterrohr, das aus einem Rohr besteht, das an beiden Enden mit aufschraubbaren, aufsteckbaren bzw. verklebbaren Flanschen versehen ist. Das Aufschrauben, Verkleben bzw. Aufstecken kann vor Lieferung oder auch an Ort und Stelle im Zuge des Einbaues der Rohrdurchführung erfolgen.

Bevorzugt ist es, wenn der Flansch bzw. der Rohrteil zwischen dem Flansch und dem Gewindeabschnitt zum Einschieben eines Setzungsschutzrohres einen gegenüber dem Futterrohr größeren Innendurchmesser besitzt, wobei es gegebenenfalls zweckmäßig ist, daß vom Flansch bzw. von dem Rohrteil zwischen dem Flansch und dem Gewindeabschnitt ein nach innen gerichteter Anschlag abgeht, der gegen das Futterrohr und/oder ein Setzungsschutzrohr anlegbar ist. Die Länge dieses Rohrteiles wird dadurch bestimmt, wieweit man nach dem Ausschalen ein Setzungsschutzrohr einschieben will. Dieses zusätzliche Setzungsschutzrohr kann eingesteckt, allenfalls auch in im Rohrteil vorgesehene Gewinde eingeschraubt oder eingeklebt, werden. Auch wenn kein Setzungsschutzrohr eingeschoben wird, dient die Ausbildung des Rohrteiles mit einem größeren Durchmesser bereits als ein gewisser Setzungsschutz.

Die Erfindung wird nachstehend anhand der Zeichnung, in der Ausführungsbeispiele des Erfindungsgegenstandes dargestellt sind, näher beschrieben. Es zeigen:

Fig. 1 eine bekannte Rohrdurchführung;
Fig. 2 eine unverspannte erfindungsgemäße Rohrdurchführung;
Fig. 3 eine verspannte erfindungsgemäße Rohrdurchführung;
Fig. 4 eine Detailansicht eines Flansches mit Sacklöchern und einzelner Ausführungsformen von Dichtungslippen;
Fig. 5 (eine Detailansicht der Rückseite eines Flansches und eine Detailansicht der Stirnseite einer Verankerungsfläche;
Fig. 6 einen an einer Schalungswand angenagelten Flansch;
Fig. 7 bis 10 verschiedene Ansichten von hinterfüllten bzw. in der Wand eingesetzten Rohrdurchführungen;
Fig. 11 eine Ansicht eines auf ein Futterrohr aufschraubbaren Flansches;
Fig. 12 eine Ansicht eines auf ein Futterrohr aufgeschraubten Flansches mit einem eingesetzten Setzungsschutzrohr;
Fig. 13 einen mit dem Futterrohr einstückigen Flanschteil;
Fig. 14 einen mit dem Futterrohr verschweißten Flanschteil und
Fig. 15 einen mit dem Futterrohr verschraubten, im Schalungsabstand einstellbaren Flansch;
Fig. 16 und 17 verschiedene Ausführungsformen von Rohrdurchführungen und
Fig. 18 eine Rohrdurchführung mit Flansch und Gegenflansch.

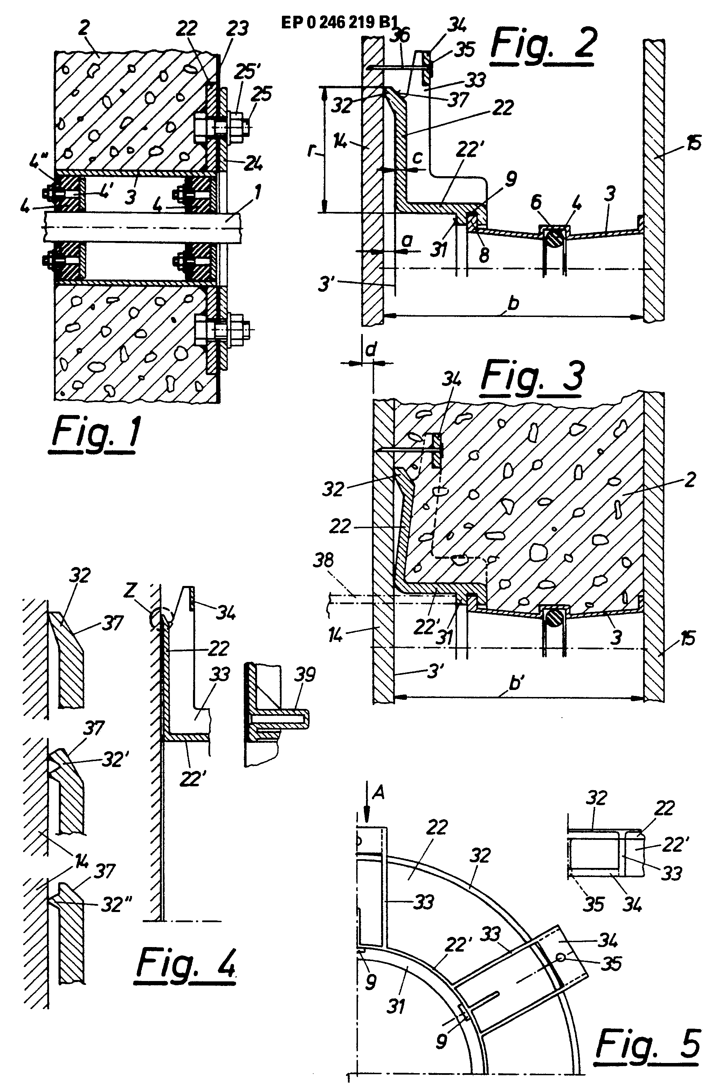

Fig. 1 zeigt eine Rohrdurchführung bekannter Bauart. In eine Wand 2 ist ein Futterrohr 3 aus Stahl, Faserzement oder Hartschaum eingebettet, das zur Durchführung eines Rohres durch die Wand 2 dient. Mit Schrauben 4' und Ringen 4'' zusammenpreßbare Dichtungen 4 halten das Rohr 1 im Futterrohr 3 dicht gelagert. Am rechten Ende des Futterrohres 3 ist ein Flansch 22 aus Stahl angeschweißt, angeschraubt oder angeklebt, von dem nach vorne gerichtete Schrauben 25 abgehen, so daß mit einem Gegenflansch 24 und Muttern 25' eine Folienbahn 23 dicht mit dem Flansch 22 verbunden werden kann. Der Flansch 22 ist mit dem Futterrohr 3 steif verbunden. Wird eine derartige Rohrdurchführung zwischen zwei Schalwände eingebaut, gibt es Probleme bezüglich der Anlage des relativ breiten Flansches 22 an die Schalungswände; es wird Beton zwischen die Schalungswände und den Flansch 22 gelangen und in die Rohrdurchführung eintreten.

Fig. 2 zeigt eine erfindungsgemäße Rohrführung aus Kunststoff. Diese Rohrdurchführung zeigt an einem Ende eines Futterrohres 3 einen Flansch 22, der auf das Futterrohr 3 mit einem Gewindeabschnitt 9 aufgeschraubt ist. Der Gewindeabschnitt 9 ist als Innengewinde ausgebildet und der entsprechende Gewindeabschnitt 8 am Futterrohr 3 ist ein Außengewinde. Ein Bund bzw. Anschlag 31 regelt das Aufschrauben des Flansches 22 auf das Futterrohr 3; bis zum Anschlag des Bundes 31 am Futterrohr 3 kann der Flansch 22 auf das Futterrohr 3 aufgeschraubt werden. Dieser Bund 31 dient gleichzeitig als Anschlag für das Einschieben eines Setzungsschutzrohres 38 (Fig. 3). Es ist möglich, den Flansch 22 und das Futterrohr 3 bzw. die Gewindeabschnitte 8, 9 zu verschweißen bzw. zu verkleben, um sie dichtend zu verbinden. Der Flansch 22 geht in einen Rohrteil 22' über, der sich im wesentlichen axial zum Futterrohr 3 bis zum Gewindeabschnitt 9 erstreckt. Der Flansch 22 erstreckt sich im wesentlichen parallel zur Ebene der Öffnung 3' der Rohrdurchführung bzw. des Rohrteiles 22' und weist in seinem Randbereich eine nach vorne abgebogene Dichtungslippe 32 auf, welche gegen die Schalungswand 14 angelegt ist. Der Flansch 22 kann in bezug auf die Ebene der Öffnung 3' des Rohrteiles 22' leicht geneigt oder parallel verlaufen.

An seiner Rückseite trägt der Flansch 22 Rippen 33, die sowohl mit seiner Rückseite als auch mit dem Rohrteil 22' verbunden sind, um die Steifigkeit des Flansches 22 zu erhöhen. In einem über die Dichtungslippe 32 hinaus überstehenden Bereich tragen die Rippen 33 eine Verankerungsfläche 34, welche sich im wesentlichen parallel zum Flansch 22 erstreckt. In dieser Verankerungsfläche 34 kann eine Bohrung 35 vorhanden sein, durch welche Befestigungselemente, z. B. Nägel 36, durchführbar sind, mit denen die Verankerungsfläche 34 bzw. der Flansch 22 an der Schalungswand 14 befestigt werden kann, um den Flansch 22 im Zuge des Einbaus der Rohrdurchführung in die Schalung festzuhalten.

Bevorzugt ist es, wenn der Überstand a des äußeren Randbereiches des Flansches 22 bzw. der Spitze der Dichtungslippe 32 über die Ebene der Rohröffnung 3' etwa 5 - 10 %, vorzugsweise 2 - 5 %, insbesondere 3 %, der radialen Erstreckung r des Flansches 22, gemessen vom Rohrteil 22' bis zum Ende der Dichtungslippe 32, beträgt.

Die Rückseite des Flansches 22 besitzt im Bereich der Dichtungslippe 32 eine schräggestellte Anpreßfläche 37, auf die der Druck des eingefüllten Betons bzw. des hinterfüllten Materials einwirken kann, um die Dichtlippe 32 gegen die Schalungswand 14 zu pressen.

Mit einer Dichtung 4 in einer Vertiefung 6 wird das durch die Durchführung geführte Rohr 1 abgedichtet.

Fig. 3 zeigt eine Rohrdurchführung im eingebauten Zustand. Man erkennt, daß die Breite b gemäß Fig. 2 um den Abstand a zu einer Breite b' in Fig. 3 verringert wurde, wodurch der Flansch 22 in Richtung auf das Futterrohr 3 zurückgedrückt wurde. Der Flansch 22 liegt nunmehr mit der Dichtungslippe 32 und dem vorderen Ende des Rohrteiles 22' gegen die Schalungswand 14 an und dichtet das Innere der Rohrdurchführung ab. Mit 38 ist ein nachträglich einschiebbares Setzungsschutzrohr bezeichnet, das gegen den Anschlag bzw. Bund 31 des Rohrteiles 22' anlegbar ist.

In der Praxis ist es bevorzugt, wenn der Abstand a größer ist als 0,5 mm und bevorzugterweise 3 mm beträgt. Der Abstand zwischen der Dichtungslippe 32 und den Verankerungsflächen 34 beträgt vorteilhafterweise 3 - 30, vorzugsweise 16 mm, um eine gute Hinterfüllung des Flansches 22 zu erreichen. Die Breite r des Flansches 22 zwischen dem Rohrteil 22' und der Dichtungslippe 32 beträgt etwa 100 mm.

Üblicherweise wird die Rohrdurchführung derart eingespannt, daß die Rohröffnung 3' mit ihrem Rand gegen die Schalungswand 14 anliegt. Damit wird ein definierter Anlagedruck der Dichtlippe 32 bedingt durch die Elastizität des Flansches 22 eingestellt. Es ist aber auch möglich, nur die Dichtlippe 32 an die Schalungswand 14 anzupressen, d.h. den Flansch in geringerem Ausmaß zu verformen, so daß die Rohröffnung 3' noch nicht an der Schalungswand 14 anliegt.

Fig. 4 zeigt einen Schnitt durch einen Flansch 22 mit angeformten Rippen 33, die die Verankerungsfläche 34 tragen. Schematisch ist ferner angedeutet, daß der Rohrteil 22' und/oder der Flansch 22 angeformte Sacklöcher 39 besitzen können, um selbstschneidende Schrauben 25 aufzunehmen, mit denen der Gegenflansch 24 auf den Flansch 22 aufgeschraubt werden kann. Links in Fig. 4 sind verschiedene Formen von Dichtungslippen 32 dargestellt. Es ist z. B. möglich, eine Dichtungslippe 32 in Form einer abgebogenen Flanschspitze auszubilden oder zwei nebeneinanderliegende Spitzen 32' vorzusehen oder als Dichtungslippe einen von der vorderen Seite des Flansches 32 abgehenden ringförmig umlaufenden Vorsprung 32" auszubilden.

Fig. 5 zeigt eine Hintersicht eines Flansches 22. An der Rückseite des Flansches 22 sind die Rippen 33 angeformt, welche die Verankerungsfläche 34 mit Bohrungen 35 tragen, welche außerhalb des Umfanges der Dichtungslippe 32 liegen. Die Ansicht A in Fig. 5 zeigt eine Sicht auf die Schmalseite des Flansches 22 und man erkennt die bezüglich der Dichtungslippe 32 bzw. des Flansches 22 nach rückwärts versetzten Verankerungsflächen 34. Der Rohrteil 22' ist relativ schmal ausgebildet und trägt Gewindezapfen 9 und den Anschlag 31.

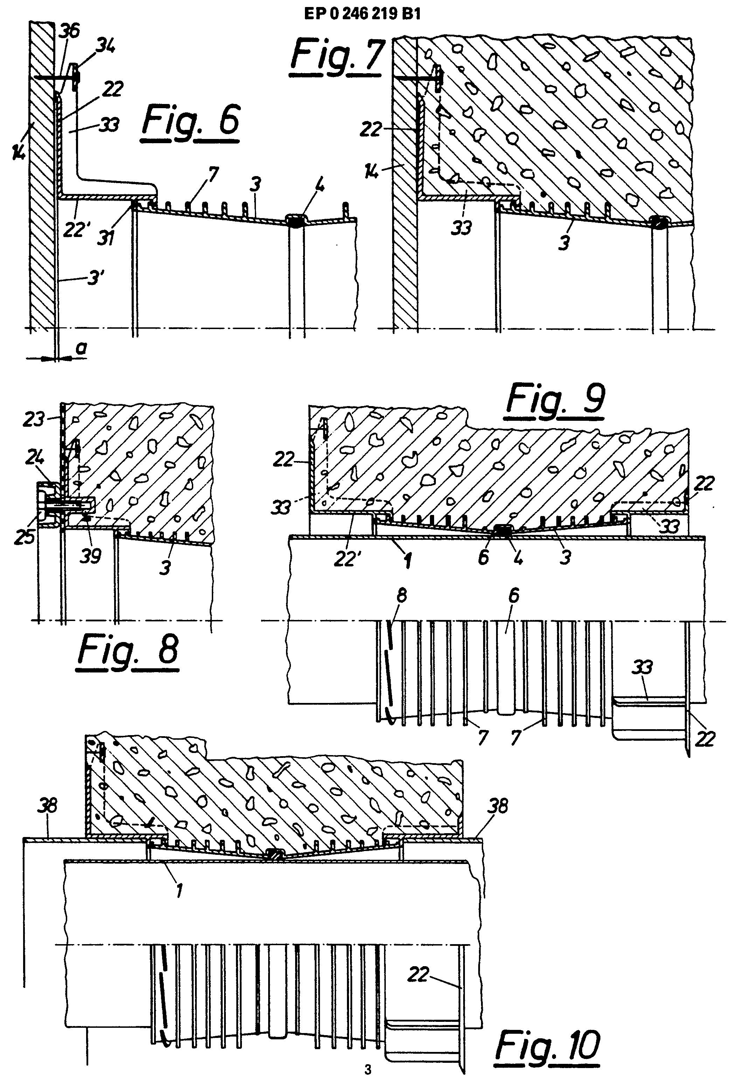

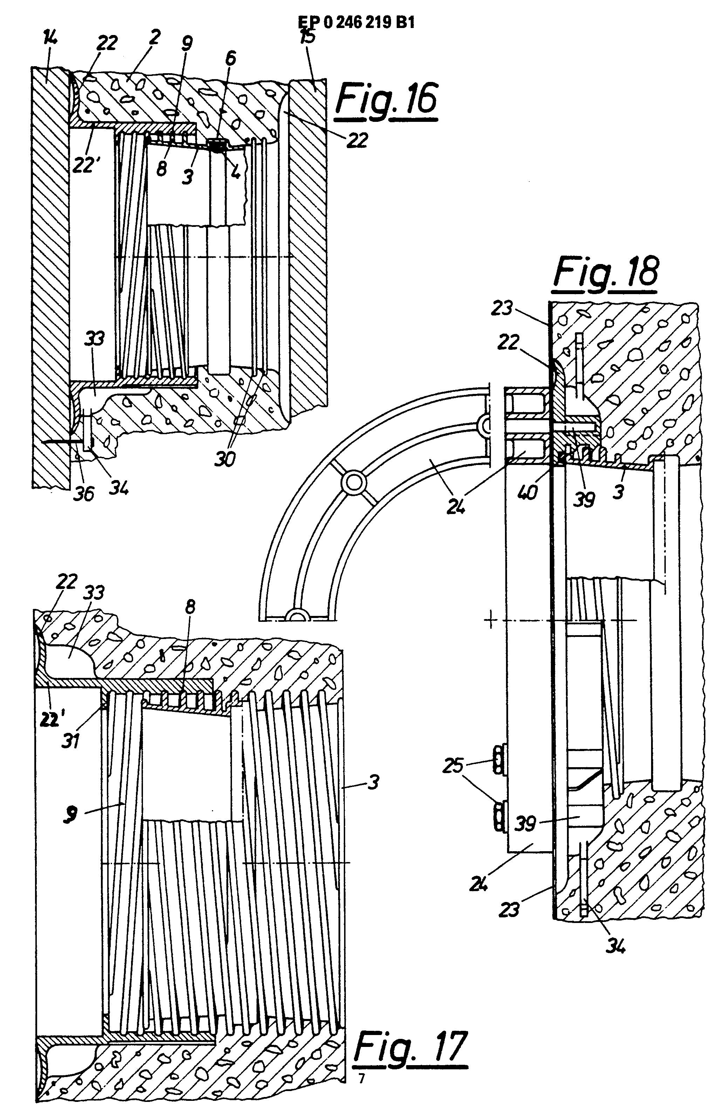

Fig. 6 zeigt ein Futterrohr 3 mit an seiner Außenseite vorgesehenen Vorsprüngen 7 zur Verankerung im Mauerwerk. Der Flansch 22 ist mit Nägeln 36 an der Schalungswand 14 befestigt; es ist noch ein Abstand a zwischen der Schalungswand 14 und der Öffnung 3' vorhanden. Fig. 18 zeigt die mit Mauerwerk hinterfüllte und gegen die Schalungswand 14 gepreßte Rohrdurchführung gemäß Fig. 6.

Fig. 8 zeigt eine Rohrdurchführung, bei der ein Gegenflansch 24 mit Schrauben 25, die in die Sacklöcher 39 eingreifen, am Flansch 22 befestigt ist, um eine Folienbahn 23 dichtend anzuschließen.

Fig. 9 zeigt eine Rohrdurchführung, bei der auf ein Futterrohr 3, das mit der Dichtung 4 ein Rohr 1 dichtend führt, an jedem Ende ein Flansch 22 aufgeschraubt ist. Der an dem rechten Ende des Futterrohres 3 angeordnete Flansch ist von beträchtlich kleineren radialen Abmessungen als der am linken Ende der Rohrdurchführung vorgesehene Flansch, ist hinsichtlich seiner Funktion jedoch gleichwertig. Beide Flansche sind mittels Rippen 33 verstärkt bzw. in ihrer Elastizität eingeregelt. Man erkennt ferner Gewindeabschnitte 8 am Futterrohr 3, auf die die Gewindeabschnitte bzw. -zähne 9 des Rohrteiles 22' aufgeschraubt werden können.

Fig. 10 zeigt den Einbau von Setzungsrohren 38 in eine Rohrdurchführung gemäß Fig. 9.

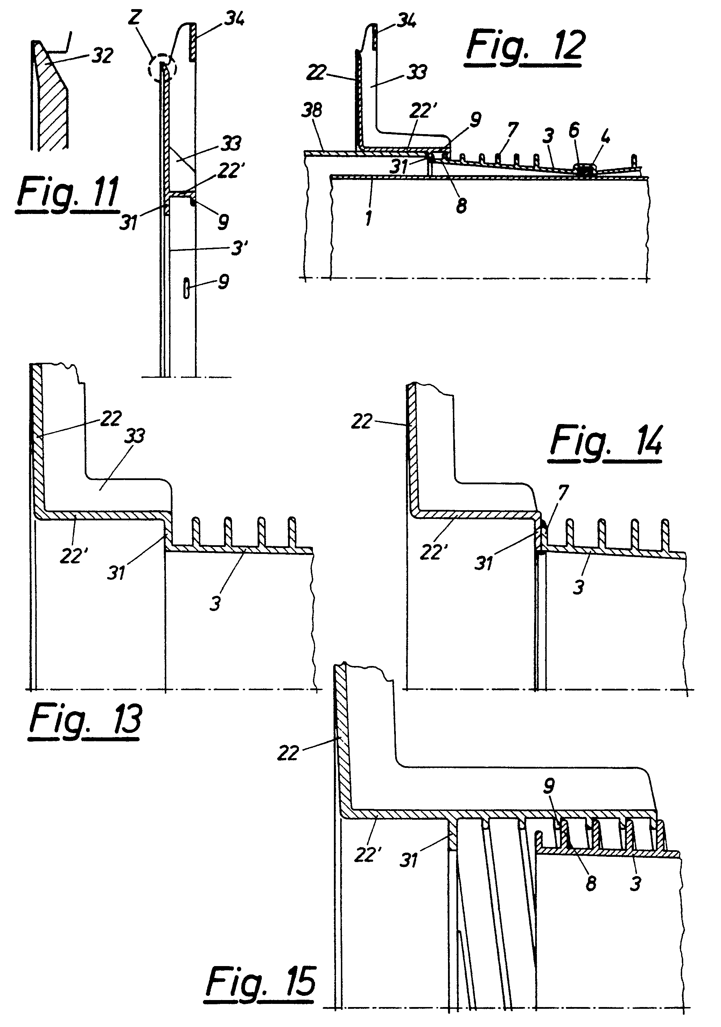

Fig. 11 zeigt die Ausbildung eines Flansches mit sehr kurzem Rohrteil 22', der Gewindezähne 9 trägt und in den ein Setzungsschutzrohr 38 nicht eingeschoben werden kann. Der Bund bzw. Anschlag 31 liegt in der Öffnung 3' des Rohrteiles 22'. Ansonsten ist dieser Flansch 22 jedoch genauso ausgestaltet wie die bisher beschriebenen Flansche und kann z. B. durch Schrauben und Verkleben mit dem Futterrohr 3 verbunden werden; der Bund 31 dient auch als Anschlagbegrenzung beim Aufschrauben auf das Futterrohr 3.

Fig. 12 zeigt eine Anordnung von einem auf ein Futterrohr 3 aufgeschraubten Flansch 22 mit Rohrteil 22' mit eingesetztem Setzungsschutzrohr 38 und einem durch das Futterrohr 3 durchgeführten Rohr 1.

Die Verbindung zwischen Flansch 22 bzw. Rohrteil 22' und dem Futterrohr 3 kann mittels Schraub-, Steck- und/oder Klebeverbindung erfolgen. Fig. 13 zeigt eine einstückige Ausbildung von Futterrohr 3 und Flansch 22. Der Rohrteil 22' ist mit dem Futterrohr 3 einstückig und weist einen Durchmesser auf, welcher größer ist als das Futterrohr 3, so daß ein Setzungsschutzrohr 38 bis zum Anschlag 31 eingeschoben werden kann. Fig. 14 zeigt einen Flansch 22 mit einem Rohrteil 22', der mit dem Futterrohr 3 verklebt bzw. verschweißt ist. Dazu wird der nach innen ragende Anschlag 31 des Flansches 22 mit einem nach außen ragenden Vorsprung 7 des Futterrohres 3 verklebt bzw. verschweißt. Fig. 15 zeigt eine im Schalungsabstand einstellbare Rohrdurchführung, bei der der Rohrteil 22' ein Innengewinde 9 besitzt, das mit einem am Futterrohr 3 vorgesehenen Außengewinde 8 verschraubt ist. Der Anschlag 31 dient als Endanschlag für das Aufschrauben auf das Futterrohr 3 und als Anschlag für ein Setzungsrohr 38.

Die in Fig. 16 dargestellte Rohrdurchführung für ein Rohr 1 durch eine Wand 2 besteht aus dem Futterrohr 3 und dem den Flansch 22 tragenden Rohrteil 22'. Das Futterrohr 3 ist an seiner inneren Umfangsfläche in seiner Längsmitte mit einer umlaufenden, nutförmigen Vertiefung 6 versehen, in welche die Dichtung 4 eingesetzt wird, die dichtend an der äußeren Umfangsfläche des Rohres 1 anliegt. Das Futterrohr 3 wird koaxial zum Rohr 1 angeordnet und erweitert sich von der Vertiefung 6 ausgehend in beide Richtungen auf seine stirnseitigen Enden hin und ist an seiner äußeren Umfangsfläche mit Vorsprüngen 30 bzw. Gewindeabschnitten 8 versehen, die gegebenenfalls unterschiedliche Höhe aufweisen. Die Vorsprünge 30 sind in die Wand 2 eingebettet. Mit den Gewindeabschnitten 8 des Futterrohres 3 steht der Rohrteil 22' in Eingriff. Der Rohrteil 22' weist zu diesem Zweck auf einem Teil seiner inneren Umfangsfläche einen korrespondierenden Gewindeabschnitt 9 in Form eines Innengewindes auf, in das ein Teil der ein Außengewinde bildenden Gewindeabschnitte 8 des Futterrohres 3 eingreift. Der Rohrteil 22' ist mit seiner äußeren Umfangsfläche, die die Rippen 33 trägt, ebenfalls in die Wand 2 eingebettet.

Zufolge der beschriebenen Ausbildung ist der Rohrteil 22' mit dem Flansch 22 in bezug auf das Futterrohr 3 in axialer Richtung verstellbar, um das Futterrohr 3 und den Rohrteil 22' in die Wand 2 dicht einzubetten.

Das Futterrohr 3 kann mit dem Rohrteil 22' auch vor dem Aufziehen der zweiten Schalungswand 15 in der erforderlichen Länge voreingestellt werden und anschließend die zweite Schalungswand 15 montiert werden. Das Futterrohr 3 ist somit fest eingespannt.

Das Gewinde des Futterrohres 3 übernimmt die durch die Verspannung zwischen den Schalungswänden 14, 15 hervorgerufenen Druckkräfte der abgebogenen Flansche 22 und ist selbsthemmend ausgebildet, damit es auch während des Betonrüttelvorganges seine Vorspannung behält.

Mit der beschriebenen Anordnung ist eine Feineinstellung der Gesamtlänge des Systems in der Schalung über einen Bereich von z. B. 50 mm durch die Schraubverbindung leicht möglich. Die Anordnung wird dabei zwischen die Schalungen eingespannt. Eine Unterstützung bei Schalungsabständen über 0,5 m ist empfehlenswert.

Die Gewindeausbildung sowie gegebenenfalls eine pyramidenförmige Struktur auf der Umfangsfläche im Kernbereich des Gewindegrundes und im Sickenbereich des Futterrohres 3 gewährleisten eine optimale Fugendichtheit zum Beton.

Wenn Wanddicken der Wand von mehr als 250 mm zu überbrücken sind, können diese größeren Schalungsabstände mit Hilfe längerer Futterrohre überbrückt werden, welche zuvor planparallel in der ungefähr benötigten Länge zugeschnitten werden.

Der linke Abschnitt in Fig. 16 stellt einen Schnitt durch die Rohrdurchführung und der rechte Abschnitt stellt eine Außenansicht dar.

Wie dargestellt, besitzt die Rohrdurchführung an jedem Ende einen Flansch 22, wobei der rechts gelegene Flansch 22 einstückig mit dem Futterrohr 3 ausgebildet ist.

Fig. 17 zeigt eine Variante zu Fig. 16, gemäß welcher sich ein Gewindeabschnitt über die gesamte Länge des Futterrohres 3 erstreckt, der teilweise wie die Vorsprünge 30 in Fig. 16 in die Mauer 2 eingebettet wird, während der Gewindeabschnitt 8 mit dem korrespondierenden Innengewinde 9 des Rohrteiles 22' zusammenwirkt. Auf derartige Futterrohre 3 können bei Bedarf beidseitig Rohrteile 22' mit Flanschen 22 aufgeschraubt werden bzw. ein oder beidseitig Setzungsschutzrohre eingeschoben werden.

Fig. 18 zeigt teilweise im Schnitt bzw. in Ansicht eine Ausführungsform der Erfindung mit einer Folienbahn 23. Bei dieser Ausführung wird an den Flansch 22 die Folienbahn 23 angelegt. Gegen diesen Flansch 22 ist der Gegenflansch 24 anpreßbar und die Folienbahn 23 wird somit zwischen den Flanschen 22, 24 eingespannt. Der Gegenflansch 24 ist hiebei mittels der Schrauben 25 mit dem Flansch 22 verschraubt. Bei dieser Ausführungsform ist der Flansch 22 im wesentlichen nur in seinem außenliegenden Randbereich elastisch verbiegbar. Bevorzugt ist es, wenn die Verbiegung etwa gleichmäßig über die Flanschbreite verteilt wird. Der Rohrteil 22' fehlt nahezu vollständig. Zur Dichtung zwischen Flansch 22 und Futterrohr 3 ist eine Dichtung 40 in einer Ausnehmung im Flansch 22 vorgesehen.

Das Futterrohr 3, der Rohrteil 22' und die Flansche 22 können insbesondere aus thermoplastischem Kunststoff im Spritzgußverfahren hergestellt werden. Als Kunststoffe werden insbesondere PVC, PE, Polyoxyäthylen, Polyacetale, Polycarbonate eingesetzt.

**Patentansprüche**

1. Rohrdurchführung für ein durch eine Wand, insbesondere Betonwand, zu führendes Rohr mit einem vorzugsweise aus Kunststoff bestehenden Futterrohr, welches das Rohr mit Abstand umgibt und in die Wand eingebettet wird, wobei zwischen dem Rohr und dem Futterrohr zumindest eine Dichtung angeordnet ist und das Futterrohr in zumindest einem Endbereich einen rund um die Rohröffnung verlaufenden vom Futterrohr wegweisenden ringförmigen Flansch besitzt, dadurch gekennzeichnet, daß der Flansch (22) zumindest mit seinem außenliegenden Randbereich über die Öffnung (3') der Rohrdurchführung axial übersteht und daß der Flansch (22) zur Verstellung oder Abbiegung zumindest dieses überstehenden Randbereiches unter Druckeinwirkung in Richtung auf das Futterrohr (3) in die Ebene der Öffnung (3'), z. B. durch Andrücken an eine Schalungswand (14, 15) elastisch biegbar ausgebildet ist.

2. Rohrdurchführung nach Anspruch 1, dadurch gekennzeichnet, daß der Endbereich des Flansches (22) in zumindest eine vorzugsweise spitzwinkelige Dichtlippe (32) ausläuft bzw. zumindest eine Dichtlippe (32") trägt, die vom Futterrohr (3) stirnseitig weggerichtet ist.

3. Rohrdurchführung nach Anspruch 1 oder 2, dadurch gekennzeichnet, daß der Flansch (22) in der Ebene der Öffnung (3') gelegen ist und nur die Dichtlippe (32) über die Ebene der Öffnung (3') übersteht.

4. Rohrdurchführung nach einem der Ansprüche 1 - 3, dadurch gekennzeichnet, daß die Rückseite des Randbereiches des Flansches (22) bzw. der Dichtlippe (32) mit einer Abschrägung (37) versehen ist.

5. Rohrdurchführung nach einem der Ansprüche 1 bis 4, dadurch gekennzeichnet, daß der Überstand (a) des Randbereiches des Flansches (22) bzw. der Dichtlippe (32) über die Ebene der Öffnung (3') 0,5 - 10 %, vorzugsweise- 2 - 5 %, insbesondere 3 %, der radialen Erstreckung (r) des Flansches (22) beträgt.

6. Rohrdurchführung nach einem der Ansprüche 1 - 5, dadurch gekennzeichnet, daß der Flansch (22) einen Gewindeabschnitt (9) umfaßt, der mit dem Futterrohr (3) verschraubbar ist und/oder mit diesem verklebt und/oder mittels Dichtring (40) und Nut abgedichtet wird, wobei gegebenenfalls zwischen dem Flansch (22) und dem Gewindeabschnitt (9) ein Rohrteil (22') ausgebildet ist.

7. Rohrdurchführung nach einem der Ansprüche 1 - 6, dadurch gekennzeichnet, daß auf der dem Futterrohr (3) zugewandten Rückseite des Flansches (22) Stege (33) zur Erhöhung der Festigkeit des Flansches (22) angeformt sind, die vorzugsweise mit dem Rohrteil (22') zwischen Flansch (22) und Gewindeabschnitt (9) verbunden bzw. an diesen angeformt sind.

8. Rohrdurchführung nach einem der Ansprüche 1 - 7, dadurch gekennzeichnet, daß auf der dem Futterrohr (3) zugewandten Rückseite des Flansches (22) vorzugsweise diesen nach außen überragende und insbesondere parallel zur Ebene der Öffnung (3') verlaufende Verankerungsflächen (34) vorgesehen sind, die an die Rückseite des Flansches (22) angeformt oder von den Stegen (33) getragen sind und vorzugsweise regelmäßig über den Umfang des Flansches verteilt sind, und daß gegebenenfalls die Verankerungsflächen (34) außerhalb des Umfangs des Flansches verlaufende Bohrungen (35) zum Durchführen von Befestigungselementen (36), z. B. Nägeln, besitzen.

9. Rohrdurchführung nach einen der Ansprüche 1 bis 8, dadurch gekennzeichnet, daß der Flansch (22) bzw. der Rohrteil (22') zwischen dem Flansch (22) und dem Gewindeabschnitt (9) zum Einschieben eines Setzungsschutzrohres (38) einen gegenüber dem Futterrohr (3) größeren Innendurchmesser besitzt.

10. Rohrdurchführung nach einem der Ansprüche 1 - 9, dadurch gekennzeichnet, daß der Gewindeabschnitt (9) des Flansches (22) als Innengewinde ausgebildet ist, das auf ein Außengewinde (8) des Futterrohres (3) aufschraubbar ist.

11. Rohrdurchführung nach einem der Ansprüche 1 bis 10, dadurch gekennzeichnet, daß das Futterrohr (3) an seiner äußeren Umfangsfläche, mit welcher es in die Wand (2) eingebettet wird, mit wenigstens einem Vorsprung (30) und/oder Gewindeabschnitt versehen ist.

12. Rohrdurchführung nach einem der Ansprüche 1 - 11, dadurch gekennzeichnet, daß der Flansch (22) mit seinem Gewindeabschnitt (9) in axialer Richtung in bezug auf das Futterrohr (3) stufenlos verstellbar ist und gegebenenfalls die vorzugsweise selbsthemmenden Gewindeabschnitte als Rund- oder Trapezgewinde ausgebildet sind.

13. Rohrdurchführung nach einem der Ansprüche 1 - 12, dadurch gekennzeichnet, daß der Gewindeabschnitt (9) des Flansches (22) und /oder der am Futterrohr (3) ausgebildete Gewindeabschnitt (8) sich über den gesamten Umfang erstreckende Gewindegänge oder nur kurze Gewindestücke aufweisen.

14. Rohrdurchführung nach einem der Ansprüche 1 - 13, dadurch gekennzeichnet, daß an der Rückseite des Flansches (22) Sacklöcher (39) zur Aufnahme von Schrauben (25) zur Befestigung bzw. zum Anpressen eines Gegenflansches (24) angeformt sind, so daß eine gegen den Flansch (22) angelegte Folienbahn (23) mit dem Gegenflansch (24) gegen den Flansch (22) anpreßbar ist.

15. Rohrdurchführung nach einem der Ansprüche 1 - 14, dadurch gekennzeichnet, daß der Flansch (22) und das Futterrohr (3) einstückig ausgebildet sind.

16. Rohrdurchführung nach einem der Ansprüche 1 - 15, dadurch gekennzeichnet, daß der Flansch eine teilweise ebene Stirnfläche besitzt, gegen die mit einem Gegenflansch (24) eine Folienbahn (23) anpreßbar ist, und daß der Gegenflansch (24), vorzugsweise mit Schrauben (25), mit dem Flansch (22) verspannbar ist (Fig. 29).

17. Rohrdurchführung nach einem der Ansprüche 1 - 16, dadurch gekennzeichnet, daß vom Flansch (22) bzw. von dem Rohrteil (22') zwischen dem Flansch (22) und dem Gewindeabschnitt (9) ein nach innen gerichteter Anschlag (31) abgeht, gegen den das Futterrohr (3) und/oder ein Setzungsschutzrohr (38) anlegbar ist.

18. Rohrdurchführung nach einem der Ansprüche 1 - 17, dadurch gekennzeichnet, daß das Futterrohr (3), vorzugsweise in seiner Längsmitte, wenigstens eine, insbesondere umlaufende Vertiefung (6) zur Aufnahme der Dichtung (4) aufweist, wobei sich das Futterrohr (3) von der Vertiefung (6) ausgehend beidseitig in axialer Richtung hin erweitert.

19. Rohrdurchführung nach einem der Ansprüche 1 bis 18, dadurch gekennzeichnet, daß die Gewindeabschnitte (8) des Futterrohres (3) und/oder die Gewindeabschnitte (7) des Futterrohres (3), mit welchen dieses in die Wand (2) eingebettet ist, jeweils unterschiedliche Höhen aufweisen, wobei der jeweils stirnseitige Gewindegang vorzugsweise eine geringere Höhe aufweist, als zumindest ein von der Stirnseite weiter entfernt vorgesehener Gewindegang.

20. Rohrdurchführung nach einem der Ansprüche 1 - 19, dadurch gekennzeichnet, daß das Futterrohr (3) an seiner Außenfläche, insbesondere im Bereich der Vertiefung (6) zur Aufnahme der Dichtung (4) zwischen dem Futterrohr (3) und dem koaxial angeordneten, durchzuführenden Rohr, und/oder am Gewindegrund der Gewindeabschnitte, vorzugsweise pyramidenförmig bzw. kegelförmig strukturiert, ausgebildet ist.

## Claims

1. Pipe duct for a pipe to be passed through a wall, in particular a concrete wall, having a pipe lining preferably consisting of plastics material spacially enclosing the pipe and embedded in the wall, at least one seal being disposed between the pipe and the pipe lining and the pipe lining being provided at least in an end portion with an annular flange extending around the pipe orifice and facing away from the pipe lining, characterized in that the flange (22) projects axially above the orifice (3') of the pipe duct at least by its external marginal area and that the flange (22) is formed elastically bendable for adjustment or bending at least of said projecting marginal area under the action of pressure in the direction towards the pipe lining (3) in the plane of the orifice (3'), for instance by pressing against a shuttering wall (14, 15).

2. Pipe duct according to claim 1, characterized in that the end area of the flange (22) terminates in at least one preferably acutely angled sealing lip (32") or carries at least one sealing lip (32") whose front face faces away from the pipe lining (3).

3. Pipe duct according to claim 1 or 2, characterized in that the flange (22) is disposed in the plane of the orifice (3') and only the sealing lip (32) projects above the plane of the orifice (3').

4. Pipe duct according to any one of the claims 1 to 3, characterized in that the back of the marginal area of the flange (22) or the sealing lip (32) is provided with a chamfer (37).

5. Pipe duct according to any one of the claims 1 to 4, characterized in that the projection (a) of the marginal area of the flange (22) or the sealing lip (32) above the plane of the orifice (3') amounts to 0.5 to 10 percent, preferably 2 to 5 percent, in particular 3 percent, of the radial extension (r) of the flange (22).

6. Pipe duct according to any one of the claims 1 to 5, characterized in that the flange (22) comprises a threaded portion (9) screwable with the pipe lining (3) and/or glued to it and/or sealed by means of a a sealing ring (40) and a groove, a pipe part (22') optionally being formed between the flange (22) and the threaded portion (9).

7. Pipe duct according to any one of the claims 1 to 6, characterized in that webs (33) for increasing the strength of the flange (22) are formed on the back of the flange (22) facing the pipe lining (3), said webs preferably being connected to or formed on the pipe part (22') between flange (22) and threaded portion (9).

8. Pipe duct according to any one of the claims 1 to 7, characterized in that the back of the flange (22) facing the pipe lining (3) is provided with anchoring faces (34) preferably projecting outwards above the flange and in particular extending parallelly to the plane of the orifice (3'), said anchoring faces being formed on the back of the flange (22) or supported by the webs (33) and preferably equally spacially distributed over the circumference of the flange, and that optionally the anchoring faces (34) are provided with bores (35) extending outside of the circumference of the flange for passing fastening elements (36), for instance nails.

9. Pipe duct according to any one of the claims 1 to 8, characterized in that the flange (22) or the pipe part (22') between the flange (22) and the threaded portion (9) has a larger inner diameter than the pipe lining (3) for introducing a settling (weighing down) protection pipe (38).

10. Pipe duct according to any one of the claims 1 to 9, characterized in that the threaded portion (9) of the flange (22) is formed as an internal thread screwable onto an external thread (8) of the pipe lining (3).

11. Pipe duct according to any one of the claims 1 to 10, characterized in that the pipe lining (3) is provided on its outer circumferential surface by which it is embedded into the wall (2) with at least one projection (30) and/or threaded portion.

12. Pipe duct according to any one of the claims 1 to 11, characterized in that the flange (22) with its threaded portion (9) is continuously adjustable in relation to the pipe lining (3) in axial direction and that the preferably self-locking threaded portions are optionally formed as round threads or trapezoidal threads.

13. Pipe duct according to any one of the claims 1 to 12, characterized in that the threaded portion (9) of the flange (22) and/or the threaded portion (8) formed on the pipe lining (3) are provided with threads extending over the entire circumference or with only short thread sections.

14. Pipe duct according to any one of the claims 1 to 13, characterized in that blind holes (39) for receiving screws (25) for fastening or pressing a counter flange (24) are formed on the back of the flange (22) so that a web (23) of sheet material placed against the flange (22) is pressable against the flange (22) by means of the counter flange (24).

15. Pipe duct according to any one of the claims 1 to 14, characterized in that the flange (22) and the pipe lining (3) are integrally formed.

16. Pipe duct according to any one of the claims 1 to 15, characterized in that the flange has a partly planar front face against which a web (23) of sheet material is pressable by means of a counter flange (24), and that the counter flange (24) is connectable with the flange (22), preferably by means of screws (25) (Fig. 29).

17. Pipe duct according to any one of the claims 1 to 16, characterized in that a stop (31) directed inwards against which the pipe lining (3) and/or a settling protection pipe (38) are place-able emanates from the flange (22) or from the pipe part (22') between the flange (22) and the threaded portion (9).

18. Pipe duct according to any one of the claims 1 to 17, characterized in that the pipe lining (3) is provided, preferably in its longitudinal center, with at least one, in particular peripheral, depression (6) for receiving the seal (4), the pipe lining (3) widening on both sides in axial direction starting out from the depression (6).

19. Pipe duct according to any one of the claims 1 to 18, characterized in that the threaded portions (8) of the pipe lining (3) and/or the threaded portions (7) of the pipe lining (3) by means of which it is embedded into the wall (2) are each of different pitch, the thread on the front face preferably having lower pitch than at least a thread farther removed from the front face.

20. Pipe duct according to any one of the claims 1 to 19, characterized in that the pipe lining (3) is formed on its outer surface, in particular in the area of the depression (6) for receiving the seal (4) between the pipe lining (3) and the coaxially arranged pipe to be passed, and/or on the thread base of the threaded portions, preferably with pyramid or cone structure.

**Revendications**

1. Traversée de tuyau pour un tuyau passant un mur, en particulier un mur en béton, pourvu d'un manchon de protection de préférence en matière plastique entourant le tuyau à distance et encastré dans le mur, au moins un joint disposé entre le tuyau et le manchon de protection et le manchon de protection pourvu au moins dans une zone extrême d'une bride annullaire s'étendant autour de l'orifice du tuyau et se détournant du manchon de protection, caractérisée en ce que la bride (22) projette axialement au moins par sa zone marginale extérieure en haut de l'orifice (3') de la traversée de tuyau et que la bride (22) est agencée de facon élastiquement flexible pour l'ajustement ou la flexion d'au moins ladite zone marginale projettante sous pression en direction du manchon de protection (3) dans le plan de l'orifice (3') par exemple par pression contre un mur de coffrage (14, 15).

2. Traversée de tuyau selon la revendication 1, caractérisée en ce que la zone extrême de la bride (22) se termine dans au moins un joint à lèvre (32) de préférence acutangulaire ou supporte au moins un joint à lèvre (32″) se détournant par sa face du manchon de protection (3).

3. Traversée de tuyau selon la revendication 1 ou 2, caractérisée en ce que la bride (22) est placée dans le plan de l'orifice (3') et que seulement le joint à lèvre (32) projette en haut du plan de l'orifice (3').

4. Traversée de tuyau selon une des revendications 1 à 3, caractérisée en ce que le revers de la zone marginale de la bride (22) ou du joint à lèvre (32) est pourvu d'un chanfrein (37).

5. Traversée de tuyau selon une des revendications 1 à 4, caractérisée en ce que la projection (a) de la zone marginale de la bride (22) ou du joint à lèvre (32) en haut du plan de l'orifice (3') est de 0,5 à 10 %, de préférence de 2 à 5 %, en particulier de 3 %, de l'étendue radiale (r) de la bride (22).

6. Traversée de tuyau selon une des revendications 1 à 5, caractérisée en ce que la bride (22) comporte un segment de filetage (9) apte à être vissé et/ou collé au manchon de protection et/ou étanché au moyen d'une bague d'étanchéité (40) et d'une rainure, un tronçon de tuyau (22') étant formé, le cas échéant, entre la bride (22) et le segment de filetage (9).

7. Traversée de tuyau selon une des revendications 1 à 6, caractérisée en ce que dames (33) pour augmenter la résistance de la bride (22) de préférence raccordées au tronçon de tuyau (22') entre la bride (22) et le segment de filetage (9) ou formées sur lequel sont formées sur le revers de la bride (22) tourné vers le manchon de protection (3).

8. Traversée de tuyau selon une des revendications 1 à 7, caractérisée en ce que de surfaces d'ancrage (34) projettant en haut vers l'extérieur de la bride (22) et s'étendant en particulier parallèle au plan de l'orifice (3') sont pourvues sur le revers de la bride (22) tourné vers le manchon de protection (3), lesdites surfaces étant formées sur le revers de la bride (22) ou supportées par les âmes (33) et de préférence distribuées régulièrement sur la périphérie de la bride, et que le cas échéant, les surfaces d'ancrage (34) sont pourvues, à l'extérieur de la périphérie de la bride, d'alésages (35) pour passer d'éléments de fixation (36), par exemple de clous.

9. Traversée de tuyau selon une des revendications 1 à 8, caractérisée en ce que la bride (22) ou le tronçon de tuyau (22') entre la bride (22) et le segment de filetage (9) est d'un diamètre interne plus grand par rapport au manchon de protection pour insérer un tuyau de protection contre l'affaissement (38).

10. Traversée de tuyau selon une des revendications 1 à 9, caractérisée en ce que le segment de filetage (9) de la bride (22) est formé en filet femelle apte à être vissé sur un filet mâle (8) du manchon de protection (3).

11. Traversée de tuyau selon une des revendications 1 à 10, caractérisée en ce que le manchon de protection (3) est pourvu sur sa surface périphérique extérieure par laquelle il est encastré dans le mur (2) d'au moins une saillie (30) et/ou segment de filetage.

12. Traversée de tuyau selon une des revendications 1 à 11, caractérisée en ce que la bride (22) avec son segment de filetage (9) est agencée à réglage continu en direction axiale par rapport au manchon de protection (3) et que le cas échéant, les segments de filetage, qui sont de préférence autobloquants, sont formés en filets ronds ou filets trapézoïdaux.

13. Traversée de tuyau selon une des revendications 1 à 12, caractérisée en ce que le segment de filetage (9) de la bride (22) et/ou le segment de filetage (8) formé sur le manchon de protection (3) sont pourvus de pas de vis s'étendant sur toute la périphérie ou de tronçons courts de filetage.

14. Traversée de tuyau selon une des revendications 1 à 13, caractérisée en ce que le revers de la bride (22) est pourvu de trous borgnes (39) pour loger de vis (25) pour la fixation ou la pression de contact d'une contre-bride (24) afin de presser une feuille continue (23) appliquée sur la bride (22) contre la bride (22) au moyen de la contre-bride (24).

15. Traversée de tuyau selon une des revendications 1 à 14, caractérisée en ce que la bride (22) et le manchon de protection (3) sont formés monobloc.

16. Traversée de tuyau selon une de revendications 1 à 15, caractérisée en ce que la bride est pourvue d'une face partiellement plane contre laquelle une feuille continue (23) est applicable au moyen d'une contre-bride (24) et que la contre-bride est raccordable à la bride (22), de préférence au moyen de vis (25).

17. Traversée de tuyau selon une des revendications 1 à 16, caractérisée en ce qu'une butée (31) tournée vers l'intérieur contre laquelle le manchon de protection (3) et/ou un tuyau de protection contre l'affaissement (38) est applicable s'étend à partir de la bride (22) ou du tronçon de tuyau (22') entre la bride (22) et le segment de filetage (9).

18. Traversée de tuyau selon une des revendications 1 à 17, caractérisée en ce que le manchon de protection (3) est pourvu, de préférence dans son centre longitudinal, d'au moins une gorge (6), en particulier périphérique, pour loger le joint (4), le manchon de protection (3) s'évasant à partir de la gorge (6) de part et d'autre en direction axiale.

19. Traversée de tuyau selon une des revendications 1 à 18, caractérisée en ce que les segments de filetage (8) du manchon de protection (3) et/ou les segments de filetage (7) du manchon de protection (3) par lesquels il est encastré dans le mur (2) chacun sont de pas différents, le pas de vis de face de préférence étant plus petit qu'au moins un pas de vis plus éloigné de la face.

20. Traversée de tuyau selon une des revendications 1 à 19, caractérisée en ce que le manchon de protection (3) est pourvu sur sa surface extérieure, en particulier dans la zone de la gorge (6) pour loger le joint (4) entre le manchon de protection (3) et le tuyau à traverser disposée coaxialement, et/ou à la base des pas de vis des segments de filetage, d'une structure de préférence en forme de pyramide ou de cône.

EP 0 246 219 B1

Fig. 1

Fig. 2

Fig. 3

Fig. 4

Fig. 5

*Fig. 6*

*Fig. 7*

*Fig. 8*

*Fig. 9*

*Fig. 10*

Fig. 11

Fig. 12

Fig. 13

Fig. 14

Fig. 15

*Fig. 16*

*Fig. 18*

*Fig. 17*